# EUROPEAN PATENT SPECIFICATION

(11) **EP 4 009 604 B1**
(45) Date of publication and mention of the grant of the patent: **08.10.2025**
(21) Application number: 19941408.7
(22) Date of filing: 12.08.2019
(51) Int. Cl.: H04L 45/74, H04L 47/2441, H04L 47/41

(54) **TRAFFIC BALANCING METHOD, NETWORK DEVICE AND ELECTRONIC DEVICE**
VERKEHRSLASTAUSGLEICHSVERFAHREN, NETZWERKGERÄT UND ELEKTRONISCHES GERÄT
PROCÉDÉ D'ÉQUILIBRAGE DE TRAFIC, DISPOSITIF DE RÉSEAU, ET DISPOSITIF ÉLECTRONIQUE

(43) Date of publication of application: 08.06.2022
(73) Proprietor: Huawei Technologies Co., Ltd., Longgang District Shenzhen, Guangdong 518129 (CN)
(72) Inventor: LAM, Wan, Shenzhen, Guangdong 518129 (CN); TAL, Alex, Shenzhen, Guangdong 518129 (CN); TANG, Dezhi, Shenzhen, Guangdong 518129 (CN)
(74) Representative: Isarpatent
(86) International application number: PCT/CN2019/100270
(87) International publication number: WO 2021/026740

(56) References cited:
- CN-A- 103 875 261
- CN-A- 108 390 820
- CN-A- 108 737 557
- CN-A- 109 257 282
- US-A1- 2015 124 608
- US-A1- 2017 085 485
- US-A1- 2018 278 540

## Description

### TECHNICAL FIELD

This application relates to the field of communications technologies, and in particular, to a traffic balancing method and a network device.

### BACKGROUND

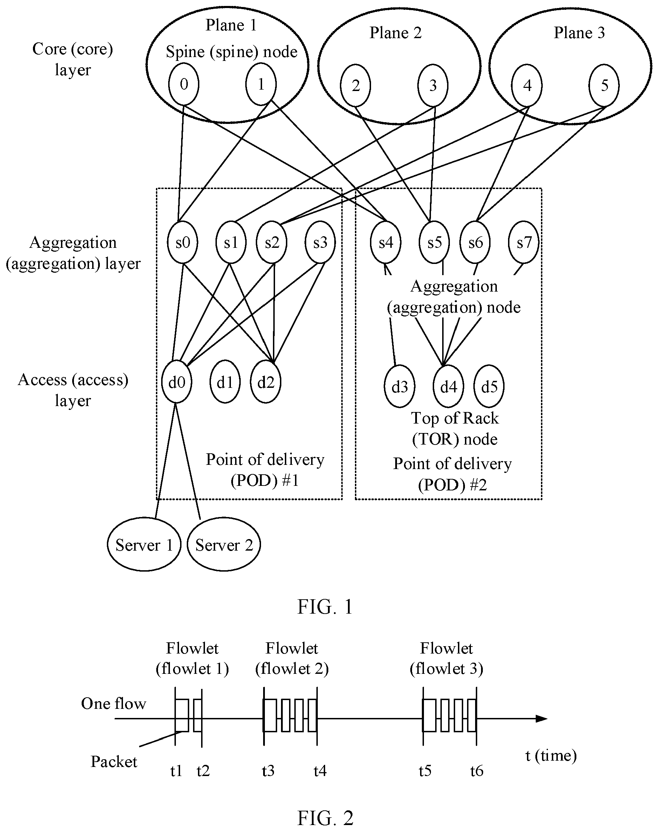

In a data center network (DCN), different networking modes may be used to provide networks for numerous servers in the DCN. FIG. 1 shows a common three-layer networking mode among the plurality of networking modes. The DCN is divided into three layers. A downlink port of a top of rack (TOR) node at an access layer is connected to a server. An uplink port of the TOR node is connected to a downlink port of an aggregation node at an aggregation layer. An uplink port of the aggregation node is connected to a downlink port of a spine node (also referred to as a backbone node) at a core layer.

It can be seen from an architecture shown in FIG. 1 that, there may be a plurality of available paths between a data source and a data destination. For example, there are a plurality of available paths from a data source s0 to a data destination s4 in FIG. 1. Therefore, it is urgent to propose a traffic balancing method, so that data is evenly distributed to a plurality of available paths to maximize bandwidth utilization of a DCN.

US 2018/0278540 A1 discloses systems and methods for reliable, out-of-order receipt of packets. An apparatus is configured to communicate with a network and a host device. The apparatus may receive packets over the network at a receive queue. The packets may originate from a source on the network, and may be received out of order. The apparatus may further, for each received packet, identify a transport context associated with the source and a destination of the packet, and determine whether the packet can be accepted. Upon determining that the packet can be accepted, the apparatus may further identify the one receive queue at which the packet was received, determine a user application to receive the packet, transfer the packet from the one receive queue to a buffer in host memory, and identify an order in which the packet was received with respect to other packets.

US 2017/0085485 A1 discloses that a first flowlet of a flow from a source network device to a destination network device is assigned to a first path of a plurality of paths between the source device and the destination device. The assignment of the first flowlet to the first path is made by a network connected device. A second flowlet is detected in response to an interruption in transmission of the flow due to congestion along the first path, wherein the interruption is longer in duration than a difference in a transmission time between the source network device and the destination network device along each of the plurality of paths. The second flowlet is assigned to a second path of the plurality of paths by the network connected device.

### SUMMARY

A traffic balancing method and a network device provided in this application, as defined in the appended set of claims, can dynamically control path switching, thereby implementing more flexible traffic balancing.

The network device may be a standalone device, or may be a component integrated in a device, for example, may be a chip system in a device. The network device may be an apparatus having a sending node function, for example, may be a sending node, or may be a chip system in a sending node.

One flowpac includes at least one packet, and packets belonging to a same flowpac have a same destination node and a same sending path.

It should be noted that, a flowpac is a data combination form proposed in this application. A flowpac is a collection of a series of packets. Different flowpacs may be distinguished by using flowpac labels or other manners.

Compared with a conventional technology in which dynamic load balancing at a sufficient granularity is difficult to trigger, in a traffic balancing method provided in this application, flowpacs are flexibly created or maintained, and a to-be-sent packet is classified into a corresponding flowpac based on a destination node. In this way, packets in a same flowpac may be sent by using a same path, and packets in different flowpacs may be sent by using different paths. In other words, according to the technical solution in this application, path switching can be dynamically controlled based on a flowpac to which a packet belongs. In addition, a path switching granularity is related to a classification manner of a flowpac. When a flowpac includes a relatively small quantity of packets, the path switching granularity is relatively fine, that is, path switching can be triggered each time a relatively small quantity of packets are sent. When a flowpac includes a relatively large quantity of packets, the path switching granularity is relatively coarse, that is, path switching can be triggered only when a relatively large quantity of packets are sent each time. It can be learned that, in the traffic balancing method provided in this application, the path switching granularity can further be flexibly controlled by controlling a classification manner of a flowpac, so as to meet traffic balancing requirements in different application scenarios.

That a network balancing parameter meets a preset condition includes meeting any one or more of the following conditions:
1. Within a preset interval starting from a moment at which a first packet in the first flowpac is sent, no packet destined for a same destination node exists. In other words, a sending party obtains a to-be-sent packet, and classifies the packet into a created flowpac. Starting from a moment at which the packet is sent, if no other packet having a same destination node as the packet exists within a relatively long time, that is, within the preset interval, the sending party creates a new flowpac, and may classify a subsequent to-be-sent packet beyond the preset interval into the newly created flowpac. In this way, two packets at a relatively large time interval may be classified into different flowpacs.
2. A data volume of the first flowpac reaches a preset data volume. The preset condition is as follows: If a data volume of a packet in a created flowpac reaches the preset data volume, the sending party creates a new flowpac. In other words, each flowpac includes a packet of a same data volume, that is, each flowpac includes a packet of the preset data volume. In this way, all flowpacs have a same packet data volume, to balance bandwidth resources occupied by packets in different flowpacs.
3. Duration of the first flowpac reaches preset duration. Duration of a created flowpac refers to duration of a packet in the created flowpac, and specifically, refers to a period of time starting from a sending moment of the first packet in the created flowpac. If no packet destined for a same destination node exists in the preset duration starting from a sending moment of the first packet in a created flowpac, the sending party creates a new flowpac, and classifies a packet that is to be sent at a moment after the preset duration into the newly created flowpac. This enables time resources occupied by packets destined for a same destination node in each flowpac to be roughly the same, that is, this can reduce a probability that packets destined for a same destination node in one or several flowpacs occupy a larger quantity of time resources while packets in other flowpacs occupy a smaller quantity of time resources, thereby balancing time resources occupied by packets in different flowpacs.
4. A sending frequency of the first flowpac reaches a preset frequency. A sending frequency of a created flowpac refers to whether a packet is sent fast or slowly. A sending frequency of a packet may reflect whether the packet is sent fast or slowly. Usually, the sending frequency of a packet is affected by a sending time interval between packets. The sending frequency of a packet is usually related to a data sending requirement and/or another factor. For example, when data is sent in a burst manner, the sending frequency of a packet is unfixed. The sending frequency may be relatively high in a time period, and may be relatively low in another time period. When data is sent in a pacing manner, the sending frequency of a packet is relatively fixed, and packets may be sent at a constant speed. Usually, if data is sent in the burst manner, and one or more flowlets in a currently created flowpac have a relatively high sending frequency, a new flowpac may be created to reduce load of a path corresponding to the currently created flowpac, and a subsequent to-be-sent flowlet may be classified into the newly created flowpac. This helps balance load between paths corresponding to flowpacs, and reduce a probability that a path corresponding to one or more flowpacs is overloaded due to a relatively high sending frequency of a flowlet in the one or more flowpacs.

### BRIEF DESCRIPTION OF DRAWINGS

FIG. 1 is a schematic diagram of a system architecture according to an embodiment of this application;
FIG. 2 is a schematic diagram of a flowlet according to an embodiment of this application;
FIG. 3 is a schematic diagram of principles of one type of load balancing according to an embodiment of this application;
FIG. 4 is a schematic diagram of principles of another type of load balancing according to an embodiment of this application;
FIG. 5 is a flowchart of a traffic balancing method according to an embodiment of this application;
FIG. 6 is a flowchart of a traffic balancing method according to an embodiment of this application;
FIG. 7 to FIG. 10 are schematic diagrams of principles of a traffic balancing method according to an embodiment of this application;
FIG. 11 is a schematic diagram of principles of packet ordering according to an embodiment of this application; and
FIG. 12 to FIG. 15 are schematic diagrams of a structure of a traffic balancing apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but are not used to describe a particular order of the objects.

"At least one" means one or more.

"A plurality of" means two or more than two.

"And/or" describes an association between associated objects, and indicates that three relationships may exist. For example, A and/or B may indicate the following cases: A exists alone, both A and B exist, and B exists alone, where A and B may be singular or plural. The character "/" generally indicates an "or" relationship between associated objects. For example, A/B may represent A or B.

In addition, the terms "include", "contain", and any other variants thereof mentioned in descriptions of this application are intended to cover a non-exclusive inclusion. For example, a process, a method, a system, a product, or a device that includes a series of steps or units is not limited to the listed steps or units, but optionally includes other unlisted steps or units, or optionally includes other inherent steps or units of the process, the method, the product, or the device.

It should be noted that in the embodiments of this application, the word "an example", "for example", or the like is used to represent giving an example, an illustration, or a description. Any embodiment or design scheme described as an "example" or "for example" in the embodiments of this application shall not be explained as being more preferred or having more advantages than another embodiment or design scheme. Specifically, use of "example" and "for example" is intended to present a relative concept in a specific manner.

In the specification and the accompanying drawings of this application, "of (English: of)", "corresponding (English: corresponding, relevant)", and "corresponding (English: corresponding)" may sometimes be interchangeably used. It should be noted that consistent meanings are expressed when differences are not emphasized.

A traffic balancing method provided in the embodiments of this application is applied to a system that needs traffic balancing. For example, the traffic balancing method is applied to DCNs that need traffic balancing. The DCNs in the embodiments of this application may have different networking modes, and may also have different layers. A system architecture to which the embodiments of this application are applicable is described below mainly by using an example in which the traffic balancing method is applied to a three-layer DCN. Refer to FIG. 1. The three-layer DCN includes an access layer, an aggregation layer, and a core layer.

A node at the access layer may be referred to as an access (access) node. The access node may have different specific implementations and names in different networking modes. For example, in a DCN using a leaf-spine (leaf-spine) networking mode, an access node may be referred to as a leaf (leaf) node. If the leaf node is located on a Top of Rack, such a leaf node located on the top of rack may also be referred to as a TOR node. The following provides a description mainly by using an example in which the access node is a TOR node. The access node may alternatively be nodes in other forms, which are not listed one by one in the embodiments of this application. A downlink port of the TOR node is connected to a server, and the TOR node may send and receive data by using the server.

A node at the aggregation layer may be referred to as an aggregation node. A downlink port of the aggregation node is connected to an uplink port of a TOR node.

A node at the core layer may be referred to as a core (core) node. In a DCN using the leaf-spine networking mode, the core node may be referred to as a spine node. The following provides a description mainly by using an example in which the core layer node is a spine node, and a unified description is provided herein. The core node may alternatively be other nodes than the spine node, which are not listed one by one in the embodiments of this application. A port of the spine node may be connected to an uplink port of the aggregation node.

In the embodiments of this application, the access node, the aggregation node, and the core node may all be referred to as switching nodes. A unified description is provided herein, and no details are repeated below.

One or more TOR nodes and one or more aggregation nodes may form a point of delivery (point of delivery, Pod). Spine nodes may further be classified into different spine planes (planes). Different aggregation nodes in a same POD may be connected to different spine planes. For example, spine nodes in FIG. 1 are classified into three planes. A spine node on each plane is directly connected to different aggregation nodes in PODs.

In a possible design, aggregation nodes and TOR nodes in a same POD may be in full-connection relationships. To be specific, each TOR node in a POD is connected to all aggregation nodes in the POD, and each aggregation node in the POD is connected to all TOR nodes in the POD. Certainly, connection relationships between TOR nodes and aggregation nodes in a same POD may be in other forms. This is not limited in the embodiments of this application.

An aggregation node is configured to complete a traffic exchange across TOR nodes in a same POD, for example, a traffic exchange between a source d0 and a destination d1 in FIG. 1. A spine node is configured to complete a traffic exchange across PODs, for example, a traffic exchange between a source s0 and a destination s4 in FIG. 1.

For ease of understanding content of the embodiments of this application, some technical terms are described in the following:
1. Flow: refers to an ordered data sequence of bytes with a start and an end. Packets belonging to a same flow generally have same attributes, for example, a same source Internet protocol (IP) address, a same destination IP address, and a same destination port. A source IP address, a destination IP address, a destination port (port), and the like may generally form a 5-tuple. In a common flow definition manner, byte data that comes from a same sending source and that is destined for a same destination may be referred to as a same flow. Certainly, a flow may further have another definition.
2. Flowlet: In the Transmission Control Protocol (TCP), packets may usually be sent at a fixed rate, for example, at a rate of 5 Gbit/s. Alternatively, packets may not be sent at a fixed rate, and a large quantity of packets may be sent at some moments (or at a relatively short time interval), and a small quantity of packets may be sent at some other moments (or at a relatively short time interval). This manner of not sending packets at a fixed rate may be referred to as a burst packet sending manner. One or more packets sent each time may be referred to as one flowlet. Usually, one flow may include a plurality of flowlets. FIG. 2 is used as an example. In a time period from t1 to t2, a sending node (for example, a TOR node) sends flowlet 1 with a relatively small data volume. In a time period from t3 to t4, the sending node sends flowlet 2 with a relatively large data volume. In a time period from t5 to t6, the sending node sends flowlet 3.

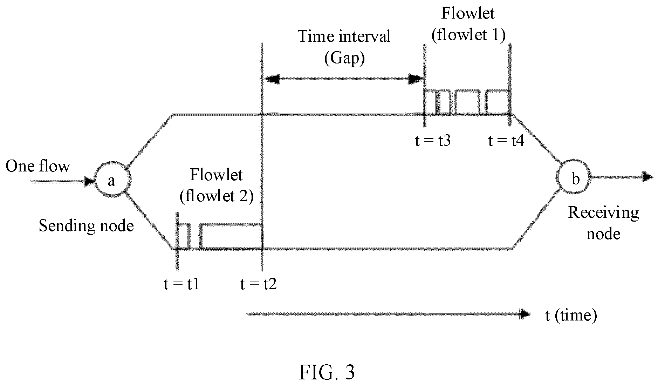

Refer to FIG. 3. a is a sending node, b is a receiving node, flowlet 1 is a plurality of packets sent by the sending node in the foregoing burst packet sending manner in a time period from t3 to t4, flowlet 2 is a plurality of packets sent by the sending node in the foregoing burst packet sending manner in a time period from t1 to t2, path delays delays of two links are respectively d1 and d2, and a time interval between flowlet 1 and flowlet 2 is Gap. If flowlet 1 and flowlet 2 belong to a same flow, when the time interval Gap between flowlet 1 and flowlet 2 is greater than |d1-d2|, the two flowlets may usually be sent by using different paths, with no concern about a disorder. Herein, the time interval between flowlet 1 and flowlet 2 refers to a time interval between the last packet in flowlet 1 and the first packet in flowlet 2, that is, a time interval between t2 and t3.

In the embodiments of this application, a flowlet may alternatively be referred to as a flow segment or another name.

3. Flow-based load balancing (also referred to as static load balancing): In a conventional traffic balancing (also referred to as load balancing (LB)) manner, a switching node in a DCN performs hash calculation on a flow by using a hash algorithm, and selects, from a plurality of available paths based on a hash result, a path used to send the flow. The hash algorithm may use the foregoing 5-tuple as input. Using FIG. 1 as an example, if only a traffic exchange in a same POD is considered, there are four available paths from d0 to d2: a path d0-s0-d2, a path d0-s1-d2, a path d0-s2-d2, and a path d0-s3-d2. It is assumed that when the hash result is 0, it indicates that s0 in POD #1 is selected to forward traffic; when the hash result is 1, it indicates that s1 in POD #1 is selected to forward traffic; when the hash result is 2, it indicates that s2 in POD #1 is selected to forward traffic; and when the hash result is 3, it indicates that s3 in POD #1 is selected to forward traffic. If a hash result of a current flow is 2, traffic is forwarded by using the path d0-s2-d2.

In the foregoing load balancing manner, packets belonging to a same flow are usually sent by using a same path. This type of load balancing performed based on a flow is referred to as flow-based load balancing (FLB) or load balancing by flow, or static load balancing (SLB).

In the foregoing load balancing by flow manner, because packets belonging to a same flow are usually carried on a same path, it can be ensured that no disorder occurs between the packets of the same flow. Therefore, a receive end usually does not need to perform re-ordering on received packets.

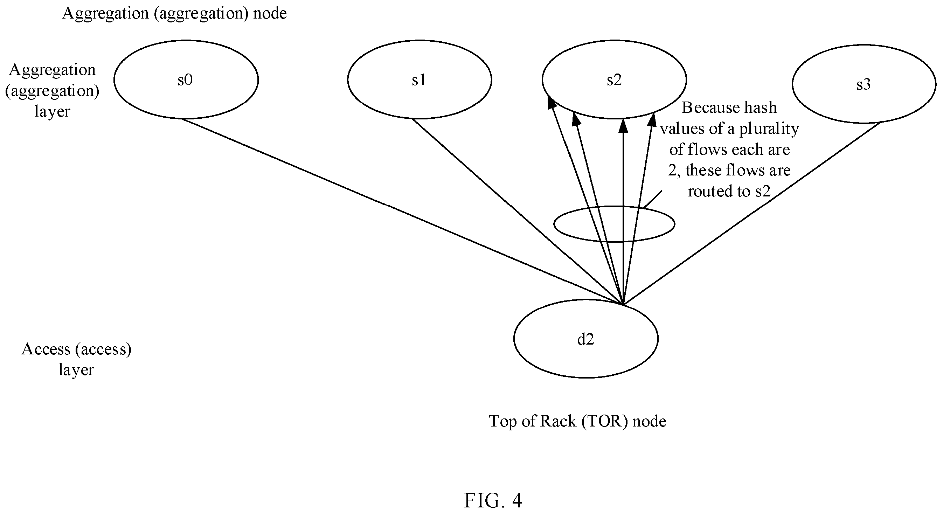

However, the load balancing by flow manner may cause congestion on data sending and receiving ports. Specifically, the SLB mechanism that uses a hash algorithm for routing may cause a hash collision. For example, a hash collision may occur on an uplink port of a TOR node that is connected to an aggregation node, or on an uplink port of an aggregation node that is connected to a spine node. Using a hash collision between a TOR node and an aggregation node as an example, in FIG. 4, hash values of a plurality of flows may be the same. In this case, when using a hash algorithm for routing, the TOR node may send a plurality of flows with a same hash value to a same aggregation node. If a plurality of flows are active at the same time, a large quantity of packets may be simultaneously sent to a same uplink port, and this may cause congestion on the uplink port.

4. Packet spray: Each switching node performs even packet spray on a plurality of available paths. In this way, a plurality of packets belonging to a same flow may be sent by using different paths. This mechanism may be collectively referred to as packet spray (packet spray). Packet spray is a dynamic load balancing (DLB) technology. Compared with flow-based load balancing, the packet spray technology has the following advantages: The foregoing hash collision problem does not exist, and bandwidth of a plurality of paths can be better utilized.

However, packet spray also has corresponding disadvantages: Because packets belonging to a same flow are sent by using different paths, the different paths may have different congestion degrees, and consequently may have different delays. Therefore, different packets in a same flow may reach a destination at different times. In other words, packets belonging to a same flow may be disordered (that is, a case that data sent later arrives earlier or data sent earlier arrives later may occur). In this case, the receive end needs to perform re-ordering on the disordered packets by using a dedicated design, for example, perform re-ordering depending on hardware or software. In a possible implementation, each flow that requires ordering may exclusively occupy one re-ordering channel (RC) or share one RC with another flow. An RC is also referred to as re-ordering logic. RC is a general term for logic, a cache, a resource, and a related data structure that are used for re-ordering, or other related content. An RC occupation time is related to a life cycle (for example, 10 ms or 2s) of a flow. In this way, when there are a large quantity of flows, a receiving side needs to have sufficient RCs for packet re-ordering. That is, if each flow exclusively occupies one RC, and if there are 10K flows, 10K RCs are required. As a result, a complexity (complexity) or scalability (scalability) problem occurs in implementation of the receive end.

In an example, the burst packet sending manner may also implement DLB. To be specific, in the burst packet sending manner, a sending path may be dynamically switched for different flowlets belonging to a same flow. For example, in FIG. 3, flowlet 1 and flowlet 2 belonging to the same flow are sent by using different paths, so that traffic is more evenly distributed.

However, the following two aspects limit application of a flowlet:
In one aspect, a DCN has large bandwidth, and a delay difference between paths is usually small (for example, 20 µs). Therefore, setting an excessively large time interval Gap (for example, Gap is set to 500 µs in some algorithms) is difficult to trigger dynamic load balancing at a sufficiently fine granularity. In other words, when Gap is set to an excessively large value, a path can be switched only when a time interval between two flowlets is greater than Gap. That is, a time interval between two flowlets is usually relatively small for a flow transmitted at a high speed, and path switching may be triggered once every a long time. This cannot meet performance of dynamic load balancing.

In another aspect, dynamic behavior in a network may affect path switching. For example, a TCP source sends data in a pacing (pacing) manner, for example, sends data through pacing. Because a time interval between packets is relatively small, it is difficult to meet preset Gap, and difficult to trigger path switching. In addition, when a resource of a switching node is exhausted, for example, a buffer (buffer) of the switching node is exhausted, the switching node may trigger backpressure (backpressure), and sends a message to a data sending party, to instruct the data sending party to temporarily postpone transmission. Consequently, data waits at the sending party. Accordingly, it cannot be ensured that a time interval for sending data is greater than a delay difference between paths. In other words, a disorder may be caused.

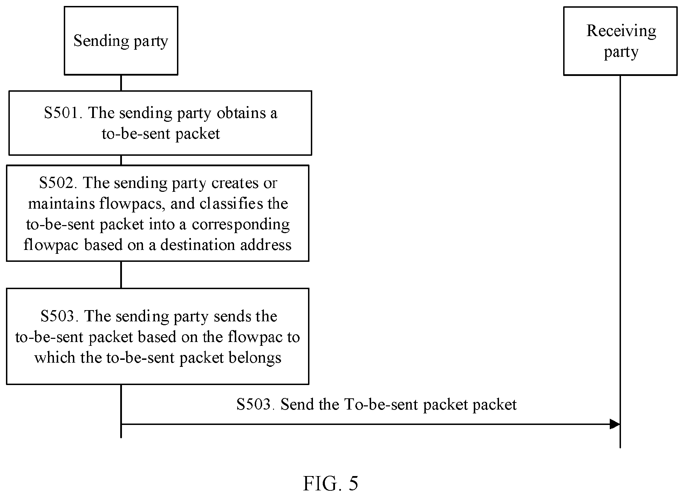

As mentioned above, when traffic balancing is performed in the foregoing packet spray manner, it is difficult to trigger dynamic load balancing at a sufficient granularity. For example, path switching may be triggered once every a long time. When traffic balancing is performed in the flow-based load balance manner, dynamic load balancing is not triggered. As a result, current load balancing performance is relatively low. To resolve this technical problem, an embodiment of this application provides a traffic balancing method. Refer to FIG. 5. The method includes the following steps.

S501. A sending party obtains a to-be-sent packet.

It is easy to understand that, when the sending party needs to send data, the sending party encapsulates the to-be-sent data into a packet based on a format defined in a protocol. The sending party may encapsulate the to-be-sent data into one or more packets based on a size of the to-be-sent data volume. In other words, the to-be-sent packet in this embodiment of this application may refer to one or more packets.

S502. The sending party creates or maintains flowpacs, and classifies the to-be-sent packet into a corresponding flowpac based on a destination node.

A flowpac is a data combination form proposed in this embodiment of this application. A flowpac is a collection of a series of packets, that is, one flowpac includes one or more packets. Packets belonging to a same flowpac have a same destination node. In other words, packets belonging to a same flowpac are all destined for a same destination node. Different flowpacs may be distinguished by using flowpac labels or other manners. For a specific flowpac distinguishing solution, refer to the following descriptions. It should be noted that, a flowpac is not a data encapsulation (data encapsulation) body specified in a protocol.

In a possible implementation, if the foregoing burst packet sending manner is used, a flowpac may include one or more complete flowlets. Using FIG. 2 as an example, one flowpac may include all packets in flowlet 1 and flowlet 2. Certainly, a flowpac may alternatively include some packets in a flowlet. Still using FIG. 2 as an example, one flowpac may include all packets in flowlet 1 and the first two packets in flowlet 2. For a specific description of a flow let, refer to the foregoing description. Details are not described herein again. In addition, packets in a flowpac may come from a same flow, or may come from different flows. That is, packets in a flowpac may be some or all packets in a flow, or may be packets in a plurality of flows. For example, one flowpac includes all packets in flowlet 1 and flowlet 2, and flowlet 1 and flowlet 2 belong to different flows. For another example, one flowpac includes all packets in flowlet 1 and flowlet 2, and flowlet 1 and flowlet 2 belong to a same flow.

In this embodiment of this application, the sending party may create or maintain different flowpacs by using obtained to-be-sent packets. Herein, the plurality of to-be-sent packets obtained by the sending party may be classified into a same flowpac. Alternatively, some of the to-be-sent packets may be classified into one flowpac, and the other of the to-be-sent packets may be classified into another flowpac, that is, the to-be-sent packets may be classified into different flowpacs. In an example of creating and maintaining a flowpac, after obtaining the to-be-sent packet, the sending party needs to first create a flowpac. Subsequently, the sending party may continue to obtain a to-be-sent packet to maintain the created flowpac. For example, there are three to-be-sent packets currently. The sending party may create, based on a destination node of the three packets, one flowpac including the three packets, that is, classify the three packets into the flowpac. Then, as time elapses, the sending party obtains a to-be-sent packet of a subsequent moment, and maintains the previously created flowpac. In other words, the sending party may classify the to-be-sent packet of the subsequent moment into the previously created flowpac, and update a quantity of packets included in the flowpac. In this way, the sending party obtains one or more to-be-sent packets, and creates or maintains a plurality of flowpacs, so as to classify the one or more packets into a corresponding flowpac, and then determine a sending path for each packet based on a flowpac to which the packet belongs.

In some embodiments, a basis for the sending party to classify a packet into a specific flowpac may be a destination node of the packet, that is, packets to be sent to a same destination node are classified into a same flowpac. In addition, packets belonging to a same flowpac have a same sending path.

In some other embodiments, a basis for the sending party to classify a packet into a corresponding flowpac may alternatively be a network balancing parameter of the packet. When the network balancing parameter meets a preset condition, the sending party may create a new flowpac, and classify a subsequent to-be-sent packet into the newly created flowpac. The network balancing parameter is used by the sending party to separately classify a plurality of packets into different flowpacs based on network balancing principles. In addition, packets in different flowpacs are sent by using different paths. In other words, a sending path may be set for a packet in a flowpac based on the network balancing principles. In the embodiments of this application, network balance mainly refers to traffic balance between links, and traffic balance means that within a period of time, a traffic difference between all of a plurality of links falls within a preset range. In other words, traffic balance means that traffic is shared by a plurality of links, and a value of traffic shared by each link is not much different. When only several of a plurality of links are used to share most traffic and the other links share only a small part of traffic, it may be considered that the traffic is unbalanced. In the embodiments of this application, the sending party determines, based on the network balancing principles, a specific flowpac into which a packet needs to be classified. This means that when there are a relatively large quantity of packets, some of the packets need to be classified into a specific flowpac and the other packets need to be classified into another flowpac based on a network balancing parameter. In this way, subsequently, some of the packets may be sent by using a path corresponding to the specific flowpac, and the other packets may be sent by using a path corresponding to the another flowpac. In other words, the plurality of packets can be sent by using different paths, thereby implementing traffic balance between the plurality of paths.

A network balancing parameter of a packet may be used to represent a network resource occupied by the packet, and the network resource may be, for example, a bandwidth resource or a time resource. In the embodiments of this application, a main network balancing parameter used for traffic balancing may be, for example, one or a combination of several of the following: a time interval Gap between packets, a data volume Size of a packet, duration Time of a packet, and a sending frequency of a packet. Certainly, the network balancing parameter may alternatively be various other measurable manners.

The one or more network balancing parameters are used to control a dynamic capability of DLB. The dynamic capability of DLB refers to a capability of flexibly selecting different paths for packets. Generally, a stronger dynamic capability indicates a greater probability that different packets are transmitted by using different paths, or easier triggering of path switching. A weaker dynamic capability indicates that different packets are usually carried by using one or several paths, in other words, indicates more difficult triggering of path switching.

Certainly, in addition to the network balancing parameters listed above, the network balancing parameter used for traffic balancing in the embodiments of this application may further be other parameters, for example, congestion degrees that are of different paths and that are obtained by a switching node from another switching node (for example, a congestion degree that is obtained by a TOR node from an upstream aggregation node and that is of a path between the TOR node and the aggregation node; and for another example, a congestion degree that is obtained by a TOR node from spine 0 and that is of a path between spine 0 and the TOR node), a depth of a sending queue of a switching node, and a feature of a sliding window (sliding window) of a switching node, for example, a size of the sliding window. The network balancing parameters listed in this section may be used to reflect a congestion status of the network. The network balancing parameter used for traffic balancing in the embodiments of this application may further include other parameters, which are not listed one by one in the embodiments of this application.

As mentioned above, in a process in which the sending party continuously obtains to-be-sent packets and creates or maintains different flowpacs, if the network balancing parameter meets the preset condition, the sending party may create a new flowpac, and may classify a subsequent to-be-sent packet into the newly created flowpac. That the network balancing parameter meets a preset condition includes one or a combination of several of the following:
1. Within a preset interval starting from a moment at which a first packet in a created flowpac is sent, no packet destined for a same destination node exists. In other words, the sending party obtains a to-be-sent packet, and classifies the packet into a created flowpac. Starting from a moment at which the packet is sent, if no other packet having a same destination node as the packet exists within a relatively long time, that is, within the preset interval, the sending party creates a new flowpac, and may classify a subsequent to-be-sent packet beyond the preset interval into the newly created flowpac. In this way, two packets at a relatively large time interval may be classified into different flowpacs.
2. A data volume of the created flowpac reaches a preset data volume. A data volume of a created flowpac refers to a data volume of a packet in the created flowpac. The preset condition is as follows: If a data volume of a packet in a created flowpac reaches the preset data volume, the sending party creates a new flowpac. In other words, each flowpac includes a packet of a same data volume, that is, each flowpac includes a packet of the preset data volume. In this way, all flowpacs have a same packet data volume, to balance bandwidth resources occupied by packets in different flowpacs.
3. Duration of the created flowpac reaches preset duration. Duration of a created flowpac refers to duration of a packet in the created flowpac, and specifically, refers to a period of time starting from a sending moment of the first packet in the created flowpac. If no packet destined for a same destination node exists in the preset duration starting from a sending moment of the first packet in a created flowpac, the sending party creates a new flowpac, and classifies a packet that is to be sent at a moment after the preset duration into the newly created flowpac. This enables time resources occupied by packets destined for a same destination node in each flowpac to be roughly the same, that is, this can reduce a probability that packets destined for a same destination node in one or several flowpacs occupy a larger quantity of time resources while packets in other flowpacs occupy a smaller quantity of time resources, thereby balancing time resources occupied by packets in different flowpacs.
4. A sending frequency of the created flowpac reaches a preset frequency. A sending frequency of a created flowpac refers to whether a packet is sent fast or slowly. A sending frequency of a packet may reflect whether the packet is sent fast or slowly. Usually, the sending frequency of a packet is affected by a sending time interval between packets. The sending frequency of a packet is usually related to a data sending requirement and/or another factor. For example, when data is sent in the foregoing burst manner, the sending frequency of a packet is unfixed. The sending frequency may be relatively high in a time period, and may be relatively low in another time period. When data is sent in the pacing manner, the sending frequency of a packet is relatively fixed, and packets may be sent at a constant speed. Usually, if data is sent in the burst manner, and one or more flowlets in a currently created flowpac have a relatively high sending frequency, a new flowpac may be created to reduce load of a path corresponding to the currently created flowpac, and a subsequent to-be-sent flowlet may be classified into the newly created flowpac. This helps balance load between paths corresponding to flowpacs, and reduce a probability that a path corresponding to one or more flowpacs is overloaded due to a relatively high sending frequency of a flowlet in the one or more flowpacs.

S503. The sending party sends the to-be-sent packet based on the flowpac to which the to-be-sent packet belongs.

Packets belonging to different flowpacs have different sending path.

Compared with a conventional technology in which dynamic load balancing at a sufficient granularity is difficult to trigger, in a traffic balancing method provided in the embodiments of this application, flowpacs are flexibly created or maintained, and a to-be-sent packet is classified into a corresponding flowpac based on a destination node. In this way, packets in a same flowpac may be sent by using a same path, and packets in different flowpacs may be sent by using different paths. In other words, according to the technical solution in the embodiments of this application, path switching can be dynamically controlled based on a flowpac to which a packet belongs. In addition, a path switching granularity is related to a classification manner of a flowpac. When a flowpac includes a relatively small quantity of packets, the path switching granularity is relatively fine, that is, path switching can be triggered each time a relatively small quantity of packets are sent. When a flowpac includes a relatively large quantity of packets, the path switching granularity is relatively coarse, that is, path switching can be triggered only when a relatively large quantity of packets are sent each time. It can be learned that, in the traffic balancing method provided in this embodiment of this application, the path switching granularity can further be flexibly controlled by controlling a classification manner of a flowpac, so as to meet traffic balancing requirements in different application scenarios.

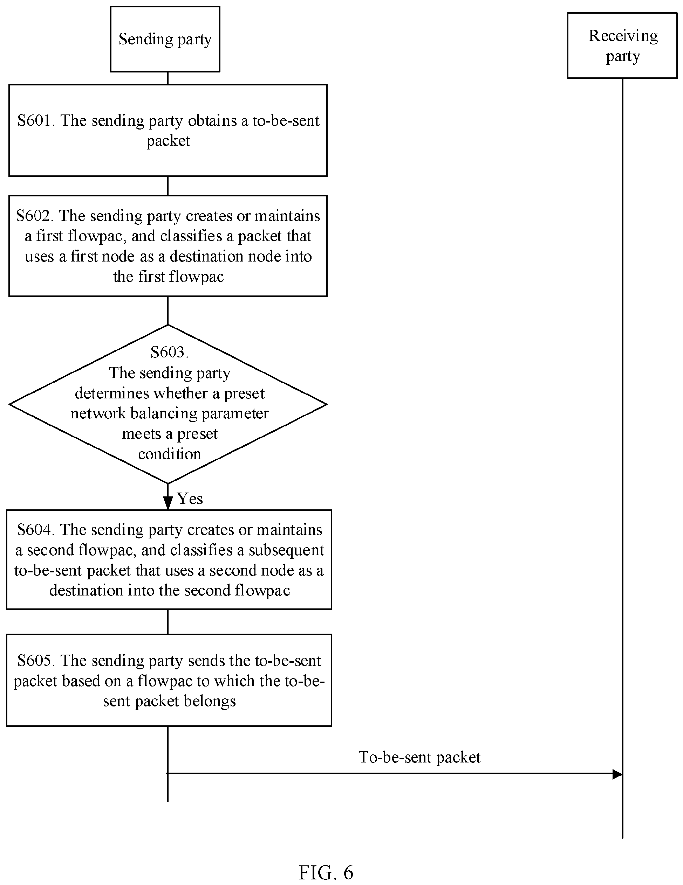

The technical solutions in the embodiments of this application are described in the following with reference to specific examples and by using an example of creating or maintaining the first flowpac and creating or maintaining the second flowpac. Refer to FIG. 6. A traffic balancing method provided in an embodiment of this application includes the following steps.

S601. A sending party obtains a to-be-sent packet.

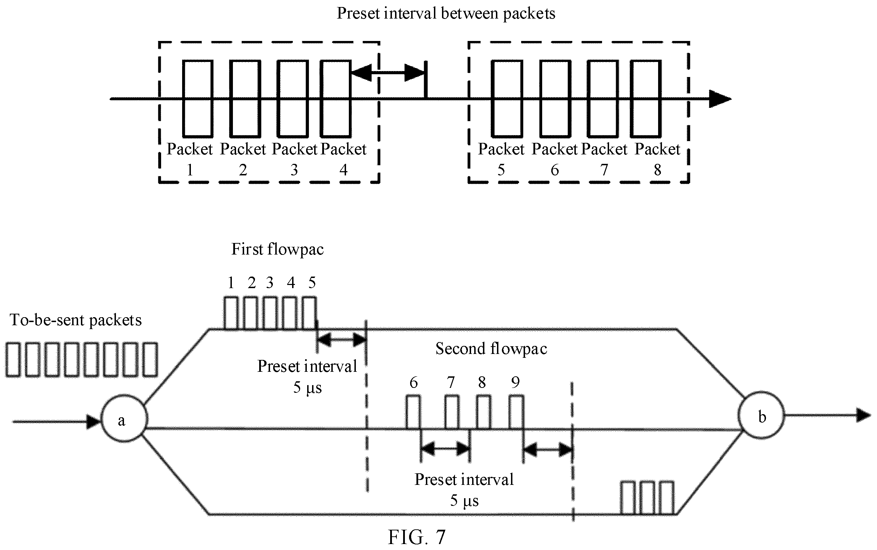

For example, as shown in FIG. 7, the to-be-sent packet includes eight packets.

S602. The sending party creates or maintains a first flowpac, and classifies a packet that uses a first node as a destination node into the first flowpac.

In this embodiment of this application, a technical solution in which traffic balancing is performed by using a same path or different paths to a same destination node is mainly described by using an example in which packets are sent from a same source node to a same destination node. The source node may be node a in FIG. 7 to FIG. 10, and the destination node may be node b in FIG. 7 to FIG. 10. In other words, the first node may be node b.

As described above, in addition to classifying a packet into a corresponding flowpac based on a destination node of the packet, the sending party may further create or maintain a flowpac with reference to a network balancing parameter of a packet, and classify the to-be-sent packet into a corresponding flowpac.

If the network balancing parameter is set to a time interval between packets, initially, the first flowpac created by the sending party may include only one packet in the to-be-sent packet. For example, as shown in FIG. 7, the to-be-sent packet obtained by the sending party includes eight packets. In this case, initially, the sending party may classify the first packet (that is, a packet numbered 1) in the eight to-be-sent packets into a first flowpac, and create the first flowpac that includes only the first packet. Subsequently, the sending party may maintain the created first flowpac, and update a quantity of packets included in the first flowpac. For example, as shown in FIG. 7, packet 2 whose sending time interval with packet 1 is less than or equal to a preset interval is classified into the first flowpac. Similarly, packet 3 whose sending time interval with packet 2 is less than or equal to the preset interval is also classified into the first flowpac. That is, the sending party detects a sending time interval between the last packet in the first flowpac and the next to-be-sent packet. If the sending time interval between the next to-be-sent packet and the last packet in the first flowpac is less than or equal to the preset interval, the sending party classifies the next to-be-sent packet into the first flowpac. For example, as shown in FIG. 7, if a sending time interval between every two of packet 1 to packet 5 in the to-be-sent packets is less than or equal to the preset interval, the sending party classifies all of packet 1 to packet 5 into the first flowpac.

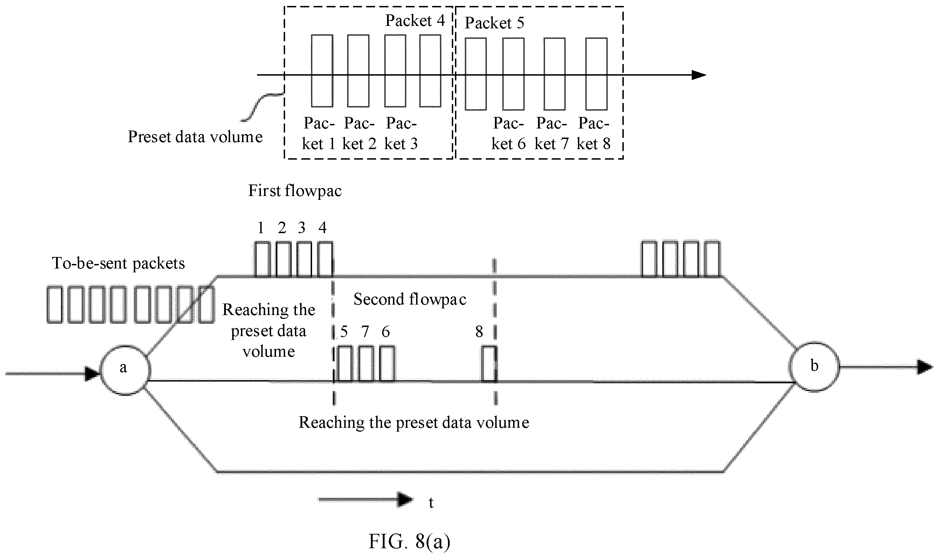

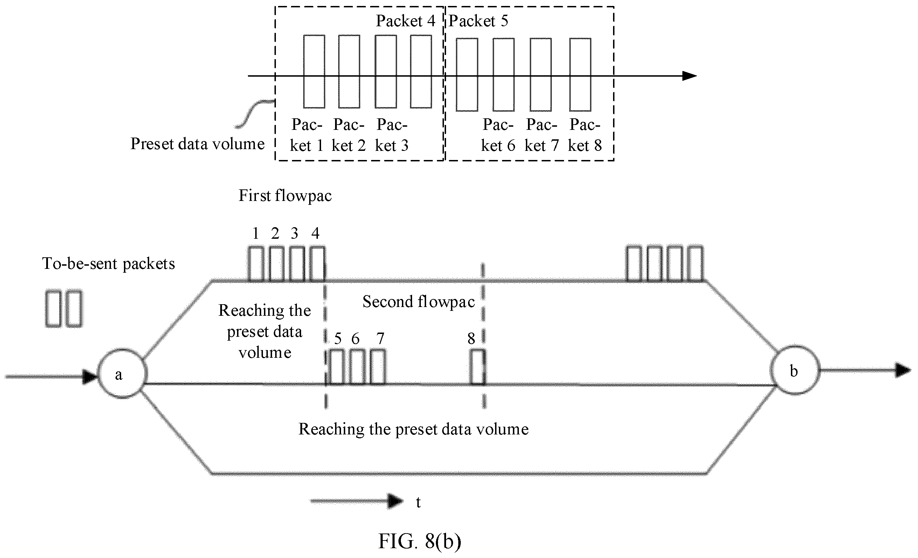

If the network balancing parameter is a data volume of a packet, initially, the first flowpac created by the sending party may include a packet of a preset data volume, or may include a packet whose data volume is less than the preset data volume. For example, all packets have a same size, a size of a single packet is 16 KB, and the preset data volume is set to 64 KB (that is, a size of four packets). In an example, as shown in FIG. 8(a), the sending party obtains, at a moment, to-be-sent packets with a relatively large data volume, which is assumed to be 128 KB (a size of eight packets). The data volume of the to-be-sent packets is greater than the preset data volume. In this case, initially, the sending party may classify four packets (that is, packets 1 to 4 shown in FIG. 8(a)) in the eight to-be-sent packets into a first flowpac, and create the first flowpac including the four packets. A data volume of the first flowpac is exactly the preset data volume. In another example, as shown in FIG. 8(b), the sending party obtains, at a moment, to-be-sent packets with a relatively small data volume, which is assumed to be 32 KB (a size of two packets). The data volume of the to-be-sent packets is less than the preset data volume. In this case, initially, the sending party may first classify the two to-be-sent packets into a first flowpac, and create the first flowpac including the two packets. Then, the sending party continues to obtain a to-be-sent packet of a subsequent moment. It can be understood that, if a data volume of the to-be-sent packet of the subsequent moment is greater than 32 KB, the sending party may classify only packets of 32 KB in the to-be-sent packet of the subsequent moment into the first flowpac, and may classify another packet in the to-be-sent packet of the subsequent moment into another flowpac that is created subsequently. On the contrary, if a data volume of the to-be-sent packet of the subsequent moment is less than or equal to 32 KB, the sending party may classify all of the to-be-sent packet of the subsequent moment into the first flowpac, update a quantity of packets in the first flowpac, and continue to obtain a to-be-sent packet, until a data volume of the packets in the first flowpac reaches the preset data volume shown in FIG. 8(b).

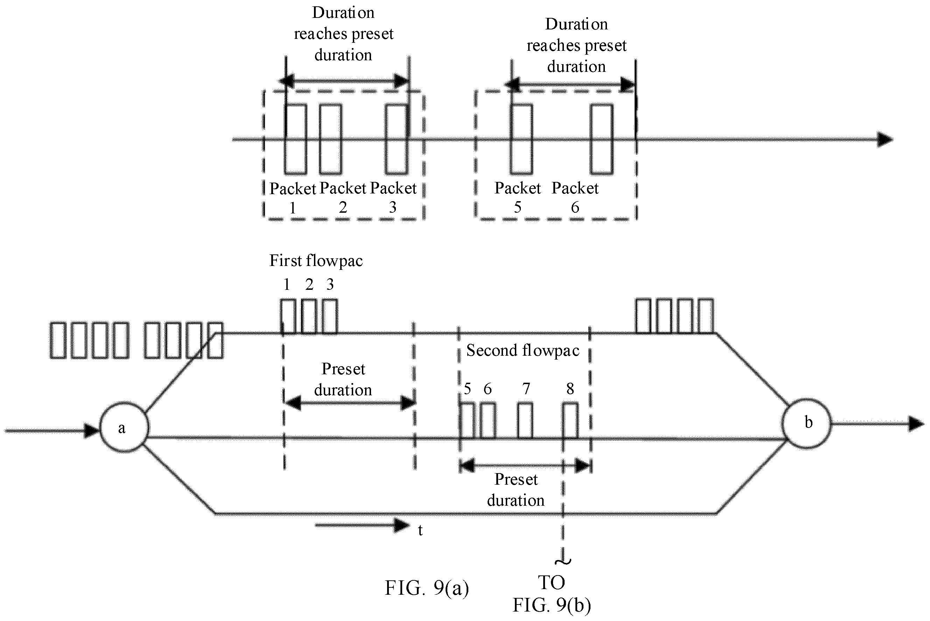

If the network balancing parameter is set to duration of a packet, initially, the first flowpac created by the sending party may include only one packet in the to-be-sent packet. For example, as shown in FIG. 9(a), the to-be-sent packet obtained by the sending party includes eight packets. In this case, initially, the sending party may classify the first packet (that is, a packet numbered 1) in the eight to-be-sent packets into a first flowpac, and create the first flowpac that includes only the first packet. Subsequently, the sending party may maintain the created first flowpac, and update a quantity of packets included in the first flowpac. For example, as marked in FIG. 9(a), a sending moment of packet 2 falls within preset duration, and therefore the sending party classifies packet 2 into the first flowpac. Similarly, a sending moment of packet 3 also falls within the preset duration, and therefore the sending party also classifies packet 3 into the first flowpac. In other words, a packet to be sent within the preset duration starting from a sending moment of the first packet in the first flowpac is classified into the first flowpac.

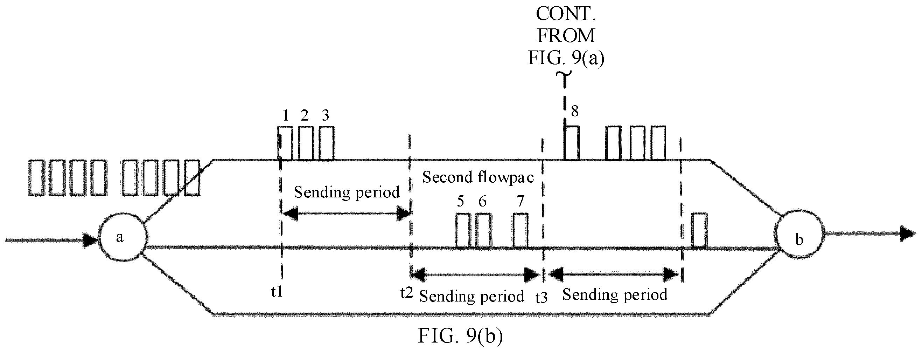

The network balancing parameter may alternatively be a sending period. In a possible implementation, a sending period is defined as a preset time period. The sending party periodically creates flowpacs, that is, creates one flowpac at an interval of one sending period. When the network balancing parameter is the sending period, initially, the first flowpac created by the sending party may include only one packet in the to-be-sent packet. For example, as shown in FIG. 9(b), the to-be-sent packet obtained by the sending party includes eight packets. In this case, initially, the sending party may classify the first packet (that is, a packet numbered 1) in the eight to-be-sent packets into a first flowpac, and create the first flowpac that includes only the first packet. Subsequently, the sending party may maintain the created first flowpac, and update a quantity of packets included in the first flowpac. For example, as marked in FIG. 9(b), a period from t1 to t2 is a sending period of the first flowpac, and a period from t2 to t3 is a sending period of a second flowpac. A sending moment of packet 2 falls within the sending period of the first flowpac, and therefore the sending party classifies packet 2 into the first flowpac. Similarly, a sending moment of packet 3 also falls within the sending period of the first flowpac, and therefore the sending party also classifies packet 3 into the first flowpac.

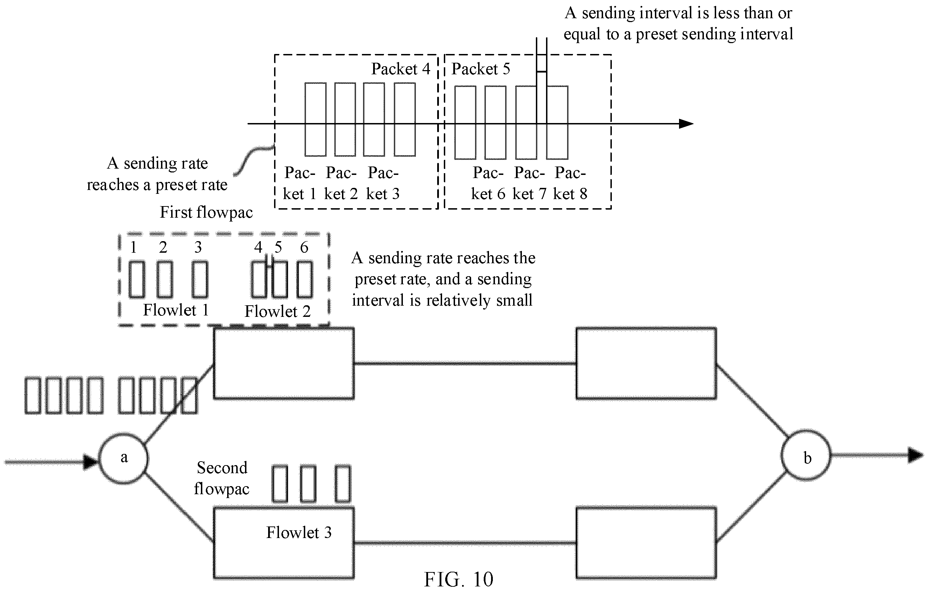

If the network balancing parameter is a sending frequency of a packet, initially, the first flowpac created by the sending party may include one packet in the to-be-sent packet. For example, as shown in FIG. 10, the to-be-sent packet obtained by the sending party includes eight packets. In this case, initially, the sending party may classify the first packet (that is, a packet numbered 1) in the eight to-be-sent packets into a first flowpac, and create the first flowpac that includes only the first packet. Subsequently, the sending party may maintain the created first flowpac, and update a quantity of packets included in the first flowpac. For example, as marked in FIG. 10, packet 2 and packet 3 belong to a same flowlet (flowlet 1) together with packet 1, a sending time interval between packet 2 and packet 1 is relatively small (not reaching a preset sending interval), and a sending time interval between packet 2 and packet 3 is also relatively small. This indicates that a sending frequency of flowlet 1 is relatively low, and the sending party classifies packet 2 and packet 3 that belong to flowlet 1 into the first flowpac. Similarly, if a sending frequency of subsequent to-be-sent flowlet 2 reaches the preset rate, packets 4 to 6 that belong to flowlet 2 are also classified into the first flowpac.

The network balancing parameter may alternatively be a combination of the data volume of a packet and the time interval between packets. In this case, a sending time interval between every two of packets in the first flowpac is less than or equal to the preset interval, and a data volume of the first flowpac is the preset data volume. For a specific creation and maintenance process of the first flowpac, refer to the foregoing creation and maintenance processes in cases that the network balancing parameter is separately the data volume of a packet and the time interval between packets. Details are not described herein again.

Certainly, the network balancing parameter may alternatively be a combination of another two or more of the plurality of network balancing parameters described above. In these cases, for a creation and maintenance process of the first flowpac, refer to the foregoing description. Details are not described herein again.

S603. The sending party determines whether a network balancing parameter meets a preset condition.

That a network balancing parameter meets a preset condition refers to one or a combination of several of the following:
within a preset interval starting from a moment at which a first packet in the first flowpac is sent, no packet destined for a same destination node exists, where the first packet is a certain packet in the first flowpac; a data volume of the first flowpac reaches a preset data volume; duration of the first flowpac reaches preset duration; and a sending frequency of the first flowpac reaches a preset rate. Certainly, as described above, that a network balancing parameter meets a preset condition may alternatively be other cases, which are not listed one by one herein.

S604. If the network balancing parameter meets the preset condition, the sending party creates or maintains a second flowpac, and classifies a subsequent to-be-sent packet that uses a second node as a destination into the second flowpac.

For example, the network balancing parameter is the time interval between packets. The sending party creates or maintains the first flowpac. If the sending party detects that no packet destined for a same destination node exists within the preset interval starting from a moment at which a packet in the first flowpac is sent, the sending party creates the second flowpac, and may classify a packet to be sent after the preset interval into the second flowpac. As shown in FIG. 7, the sending party has created and maintained the first flowpac, and the first flowpac includes packet 1 to packet 5. If the sending party detects that no packet destined for node b exists within the preset interval starting from a sending moment of packet 5, the sending party creates the second flowpac, and classifies packet 6 to be sent after the preset interval into the second flowpac. Packet 6 is the first packet in the second flowpac. For a specific maintenance process of the second flowpac, refer to the maintenance process of the first flowpac in the case that the network balancing parameter is the time interval between packets.

In this embodiment of this application, a value of the preset interval G may be smaller than G required by a flowlet in a conventional technology (this value may be determined based on experience or by using another manner), so as to avoid a phenomenon that excessively large G is difficult to trigger path switching in actual application.

If the network balancing parameter is the data volume of a packet, refer to FIG. 8(a) or FIG. 8(b). The sending party creates or maintains the first flowpac, and when detecting that the data volume of the first flowpac reaches the preset data volume, creates the second flowpac and classifies a subsequent to-be-sent packet into the second flowpac.

In this way, when a time interval between the first flowpac and the second flowpac is relatively short, that is, a sending time interval between the last packet in the first flowpac and the first packet in the second flowpac is relatively short, and a condition that a time interval is greater than or equal to a preset interval (for example, 5 µs) cannot be met, one flowpac may be constructed every time a packet of the preset data volume (for example, 256 KB) is sent, thereby improving a dynamic capability of DLB. A specific condition may be determined based on actual experience and statistical information, where when this condition is met, the preset interval is considered as "relatively small". For example, when the preset interval is less than a first threshold, it is considered that the preset interval is relatively small. The first threshold may be flexibly set. This is not limited in this embodiment of this application.

If the network balancing parameter is set to the duration of a packet, in FIG. 9(a), the sending party creates or maintains the first flowpac, and when detecting that the preset duration starting from a moment at which the first packet in the first flowpac is sent expires, the sending party creates the second flowpac, and classifies a packet that is to be sent after the preset duration into the second flowpac.

The network balancing parameter may alternatively be the sending period. Refer to FIG. 9(b). The sending party creates or maintains the first flowpac, and when detecting that the sending period for sending the first flowpac ends, the sending party creates the second flowpac, and classifies a packet that is to be sent after the sending period of the first flowpac into the second packet.

In some other embodiments, the sending party may further configure another network balancing parameter, and detect whether the parameter meets a preset condition, so as to determine whether to create the second flowpac. For example, the sending party configures a parameter: a congestion degree of a current path (for example, a first path). When detecting that a congestion degree of a link over which a packet in a currently created flowpac is sent is greater than or equal to a congestion threshold, the sending party creates the second flowpac.

It should be noted that, in this embodiment of this application, a specific parameter configured by the sending party and a quantity of configured parameters are not limited.

Certainly, the sending party may further combine the foregoing two or more conditions to determine whether to perform path switching. For example, the sending party creates the second flowpac only when detecting that the data volume of the first flowpac is relatively large (that is, reaches the preset data volume), for example, the first flowpac includes five packets, and no packet destined for a same destination node exists within the preset interval starting from a moment at which the fifth packet in the first flowpac is sent. In some other embodiments, a configuration may be as follows: a value of the preset data volume S is relatively small, and a value of the preset interval G (for example, 50 µs) is relatively large. In this way, when a data volume of a flow is small, creation of the second flowpac can be triggered by the preset interval G. That is, if two flowpacs are separated by an idle time not less than 50 µs, the creation of the second flowpac can be triggered. An idle time between the first flowpac and the second flowpac refers to: The first flowpac has no packet in the idle time, but sending of packets in other flowpacs is allowed in the idle time. Refer to the foregoing description. Specific definitions that a value of the preset data volume S is relatively small and a value of the preset interval G is large may be determined based on actual application and an algorithm. For example, a threshold may be set. When the preset data volume S is less than or equal to the threshold, it is considered that the preset data volume S is relatively small.

In an example parameter configuration manner, the following may be configured: the preset interval G is equal to infinity, the preset data volume S is equal to infinity, and the preset duration T is equal to infinity. This means that the sending party always maintains SLB, that is, does not create the second flowpac, but classifies all packets belonging to a same flow into the first flowpac.

S605. The sending party sends the to-be-sent packet based on a flowpac to which the to-be-sent packet belongs.

A sending path of a packet in the second flowpac is different from a sending path of a packet in the first flowpac.

It should be noted that, one or more packets in the first flowpac may come from a same flow, or may come from different flows. That is, packets in the first flowpac may be some packets in one flow, or may be packets in a plurality of flows. (Certainly, these packets in the same flowpac need to be destined for a same destination device). Similarly, one or more packets in the second flowpac may come from a same flow, or may come from different flows.

The first flowpac and the second flowpac may be packets in a same flow. The first flowpac and the second flowpac may alternatively come from different flows. For example, the first flowpac is a packet in flow 1, and the second flowpac is a packet in flow 2. Alternatively, the first flowpac is a packet in flow 2, and the second flowpac is a packet in flow 1. Alternatively, the first flowpac includes a packet in flow 1 and a packet in flow 2. Alternatively, the second flowpac includes a packet in flow 1 and a packet in flow 2.

It can be learned that, DLB with different performance can be implemented by setting different parameters (for example, setting the time interval Gap or the duration Time). Alternatively, DLB with different performance may be implemented by setting different values for a same parameter. In addition, these specified parameters may function separately or jointly. For example, when only the time interval parameter is set, and the sending period is set to 5 µs, path switching may be triggered once every 5 µs, and DLB performance is relatively high. Correspondingly, a receive end may need a relatively large quantity of ordering resources. When the sending period is set to 100 µs, path switching may be triggered once every 100 µs, and DLB performance is relatively low. Correspondingly, the receive end may need a relatively small quantity of ordering resources.

In some other embodiments, a plurality of sets of parameters may be set. One set of parameters refer to one or more parameters. For example, a first set of parameters include the time interval and the duration. A second set of parameters include the time interval and the data volume. One flow uses one set of parameters. Different flows may use different parameters. For example, flow 1 uses the first set of parameters for traffic balancing, and flow 2 uses the second set of parameters. Certainly, different flows may alternatively use a same set of parameters. This is not limited in this embodiment of this application.

In addition, in actual application, traffic balancing may be implemented for different flows based on different parameters, to meet differential service requirements. For example, for flow 1, the sending party detects whether a time interval between packets meets the preset interval, so as to create one or more flowpacs for flow 1 to perform traffic balancing. For flow 2, the sending party detects the parameter of the data volume of a packet, and switches a path each time 256 KB data is sent, so that different paths are dynamically selected for packets in flow 2.

In some embodiments, the sending party needs to distinguish between different flowpacs. That is, delimitation needs to be performed for different flowpacs. Delimitation refers to clearly distinguishing between flowpacs to which packets belong. Subsequently, a receiving party may perform re-ordering (re-ordering) on the packets based on the delimitation. For example, the first flowpac and the second flowpac are used as an example. The sending party may distinguish between the first flowpac and the second flowpac in any one of the following manners:

1. The sending party distinguishes between the first flowpac and the second flowpac by re-encapsulating a packet in the first flowpac or the second flowpac. For example, some label fields may be added to the packet, and specific values may be set for the fields to identify a flowpac to which the packet belongs. Alternatively, an existing field may be directly reused and a new value may be set for the field to identify the packet.

Correspondingly, the receiving party decapsulates the packet and learns, from the corresponding field in the packet, the flowpac to which the packet belongs. The receiving party may further determine, based on a delimiter identifier, whether a tail packet of the first flowpac has been received.

Specifically, a specific implementation in which the sending party encapsulates the packet may be: At least one packet in the first flowpac carries a delimiter identifier, at least one packet in the second flowpac carries a delimiter identifier, and the delimiter identifiers are used to distinguish between the first flowpac and the second flowpac.

Optionally, the delimiter identifier may be a flowpac sequence number, which is used to explicitly indicate a flowpac to which a packet belongs. Packets in a same flowpac all carry a same flowpac sequence number (FSN). For example, values of FSN fields in all packets in flowpac 0 are 0, values of FSN fields in all packets in flowpac 1 are 1, and so on. A bit width (that is, a quantity of required bits) of the FSN needs to enable the receiving side to distinguish between different flowpacs received by using different paths, for example, may be 4 bits.

For example, a flowpac carries data of only one flow. After receiving and decapsulating a current packet, if the receiving party finds for the first time that a value of the FSN field is 3, the receiving party determines that the current packet is the first packet (first packet) of flowpac 3.

In some embodiments, once receiving a tail packet carrying a tail-packet identifier in a flowpac, the receiving party stores tail packet information in a re-ordering table (ROT).

Subsequently, once receiving a new packet, the receiving party may query the re-ordering table. If tail packet information of the previous flowpac can be queried, it indicates that the receiving party has received a tail packet of the previous flowpac, and does not need to perform re-ordering on a flowpac to which the new packet belongs. For example, the receiving party receives a packet whose FSN is 4, and finds, by querying the re-ordering table, that a tail packet whose FSN is 3 has been received. Because flowpacs 3 and 4 are received based on an order in which data sent earlier arrives earlier and data sent later arrives later, the receiving party does not need to perform re-ordering.

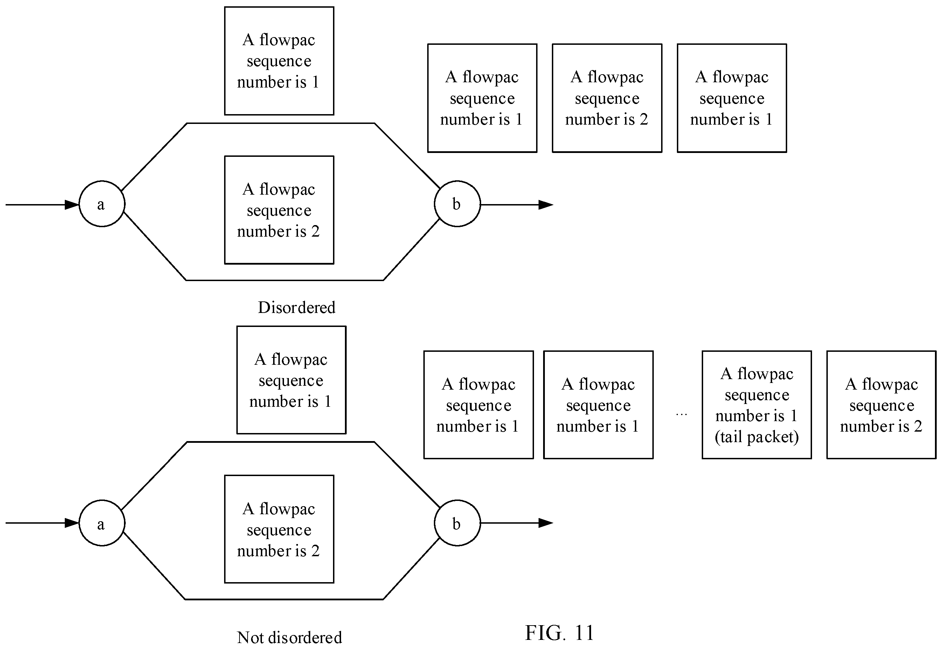

On the contrary, in FIG. 11, after receiving a new flowpac (for example, the second flowpac), if the receiving party determines, by querying the re-ordering table, that the tail packet of the previous flowpac, that is, the first flowpac, has not been received, it indicates that the first flowpac and the second flowpac do not arrive at the receiving party based on the order in which data sent earlier arrives earlier and data sent later arrives later, resulting in a disorder. Therefore, the receiving party performs re-ordering through an RC. In a possible implementation, after receiving the tail packet of the first flowpac, the receiving party releases the RC. It is easy to understand that, if the receiving party has received the tail packet of the first flowpac, it indicates that the first flowpac has been completely received. In this case, the receiving party orders the second flowpac after the first flowpac. In this case, there is no disorder problem between the first flowpac and the second flowpac, the RC may be released, and the released RC may be used in another re-ordering process, thereby improving RC utilization. Because an idle RC may be further used in another re-ordering process, this is equivalent to increasing a quantity of available RCs.

In some embodiments, the receiving party needs to occupy an RC for re-ordering only upon path switching. That is, if a delay difference between two paths is 20 µs at most, an RC needs to be occupied for only about 20 µs for a flowpac on which path switching is performed, that is, it is ensured that the RC can be released after data that is sent earlier but arrives later is received on an original path (20 µs is required at most). Compared with the packet spray mechanism in which an RC needs to be occupied throughout an entire life cycle (which may reach milliseconds or even seconds) of a flow, the re-ordering process in this embodiment of this application can reduce RC consumption.

Further, in the foregoing re-ordering process of the receiving party, an RC resource is enabled only when a disorder occurs, that is, a new flowpac is received but the previous flowpac has not been completely received. In addition, the RC is immediately released after it is determined that there is no disorder problem. An ordering period of an RC is shortened, and this can reduce RC consumption and improve RC utilization. The ordering period may refer to a period from a moment at which the receiving party determines that a disorder occurs to a moment at which an RC is released. Certainly, the ordering period may alternatively refer to a period from a moment at which the receiving party determines that a flowpac requires path switching to a moment at which an RC is released. In this embodiment of this application, a specific time period that is used as the ordering period is not limited.

By using the traffic balancing method provided in this embodiment of this application, a sending side can control the dynamic capability of DLB by using different parameters such as Gap, Size, and Time, for example, can control a quantity of flowpacs on which path switching is performed. Further, a quantity of required RCs and/or an ordering period of an RC can also be controlled based on the flowpacs on which path switching is performed. In addition, load balancing performance may vary with a parameter value and/or a parameter type (for example, the parameter type is Time or Gap). For example, when a value of a data volume is relatively large, path switching can be triggered once each time data of a relatively large data volume is sent. Dynamic performance of DLB is relatively poor, but the receiving party requires a relatively small quantity of RCs and relatively low RC consumption.

In some embodiments, different ordering policies may be selected based on a quantity of RCs available to the receiving party:
1. If the quantity of available RCs is greater than or equal to an RC quantity threshold, different RCs are used to perform re-ordering on packets of different flows. That is, each flow may correspond to one RC.
2. If the quantity of available RCs is less than the RC quantity threshold, a same RC is used to perform re-ordering on packets of different flows. That is, one flow (for example, a flow including the first flowpac and the second flowpac) uses one RC or a plurality of flows share one RC.

In some embodiments, the following dynamic re-ordering channel (dynamic re-ordering channel, DRC) algorithm may be used to further control the quantity of RCs.

A threshold N1 may be preset, for example, N1 = 512.

When the quantity of available RCs is greater than or equal to N1, each to-be-ordered flow may exclusively occupy one RC.

Otherwise, when the quantity of available RCs is less than N1, one flow (for example, the flow including the first flowpac and the second flowpac) uses one RC or a plurality of flows share one RC.

By using the foregoing DRC algorithm, a limited quantity of RC resources can be used to ensure that most or all flows do not encounter a disorder. In addition, the receiving party may also feed back an available RC resource to the sending party, so as to ensure that each sent flowpac corresponds to an available RC.

Optionally, the delimiter identifiers used to distinguish between the first flowpac and the second flowpac may be some preset identifiers in the first packets. That is, the sending party includes a preset identifier only in the first packet of each flowpac. For example, a value of a switchover (SwitchOver, SO) field of the first packet is set to 1, to indicate that this flowpac is the first packet of a new flowpac, and further indicate that this flowpac is sent by using a path different from that of the previous flowpac. That is, compared with the previous flowpac, path switching is performed once on this flowpac. Alternatively, the first packet carries a first-packet identifier in another form. For example, a value of a first packet (first packet, FP) field is 1. Alternatively, the first packet carries a packet type field. For example, packet type equal to 0 is used to indicate the first packet.

Correspondingly, after receiving and decapsulating a current packet, if a value of the SO field in the current packet is 1 and the receiving party has received one or more packets of the first flowpac, the receiving party determines that the current packet is the first packet of the second flowpac.

Similar to the foregoing description, the receiving party may determine, by querying the re-ordering table, whether to perform re-ordering. For example, the receiving party receives a current packet whose SO is 1, and finds, by querying the re-ordering table, that a tail packet of the previous flowpac has been received. Because the previous flowpac and a current flowpac are received based on the order in which data sent earlier arrives earlier and data sent later arrives later, the receiving party does not need to perform re-ordering.

In this way, a flowpac to which the current packet belongs can be distinguished by using only the first packet. This can reduce overheads of control information, and improve transmission efficiency of effective data information.

Optionally, the delimiter identifiers may be some preset identifiers in the first packets. That is, the sending party includes a tail-packet identifier or a packet type identifier only in a tail packet of each flowpac. The packet type identifier is used to indicate that a packet is a tail packet. For example, packet type equal to 3 is used to indicate a tail packet.

Optionally, another value of packet type may indicate a packet between the first packet and the tail packet in a flowpac.

Optionally, the delimiter identifier may be a packet sequence number (packet sequence, PSN). APSN carried in the first packet of the second flowpac is M, and M is a positive integer. A PSN carried in the i^{th} packet of the second flowpac is i-1, and i is an integer greater than 1. M is a difference between a quantity of packets of the second flowpac and 1.

For example, flowpac 3 includes 100 packets. In this case, a PSN in the first packet is 99, a PSN in the second packet is 1, a PSN in the third packet is 2, a PSN in the fourth packet is 3, and by analogy, a PSN in the 100^{th} packet is 99. In this way, when the receiving party receives packets that have a same PSN, for example, when the receiving party first receives the first packet (PSN = 99) in flowpac 3 and then receives a packet whose PSN is also 99, the receiving party may determine that the packet is a tail packet of flowpac 3. Afterwards, the receiving party is ready to receive the next flowpac.

Optionally, the delimiter identifier may alternatively be a feature value that is of the tail packet in the first flowpac and that is carried in the first packet of the second flowpac. The feature value includes a cyclic redundancy check (cyclic redundancy check, CRC) check value. That is, the first packet of a current flowpac carries some information about a tail packet of the previous flowpac.

Certainly, the sending party may combine the plurality of delimiter identifiers described above. For example, the sending party includes a first-packet identifier and a tail-packet identifier in a packet.

2. A dedicated flowpac delimiter may be inserted between the two flowpacs to indicate whether the tail packet of the first flowpac has been received.

Specifically, when determining that a new flowpac starts to be sent and path switching is needed, the sending party first sends a flowpac delimiter (flowpac delimiter, FPD) by using an original path, which is a first path, and then sends a new flowpac, that is, the second flowpac, by using a new path, which is a second path.

The flowpac delimiter is used to distinguish between the first flowpac and the second flowpac. The flowpac delimiter is received by using the first path and is the next packet of the tail packet of the first flowpac. The flowpac delimiter may be a control packet that has a preset feature. For example, the flowpac delimiter may be a control packet including a preset field or a control packet of a preset size. Specific implementation of the flowpac delimiter is not limited in this embodiment of this application.

Optionally, a size of the flowpac delimiter is relatively small (for example, may be less than a specific threshold). In this way, the flowpac delimiter can arrive at the receiving party at a relatively low delay, for example, the flowpac delimiter arrives at the receiving party earlier than the second flowpac. Certainly, the flowpac delimiter may alternatively arrive at the receiving party later than the second flowpac. A timing at which the flowpac delimiter arrives at the receiving party is not limited in this embodiment of this application.

Correspondingly, if the receiving party is currently receiving the first flowpac by using the first path, and subsequently the receiving party further receives a flowpac delimiter by using the first path, the receiving party can determine that the first flowpac has been completely received. In an example, the receiving party receives the second flowpac only after receiving the flowpac delimiter (the first flowpac has been completely received). The first flowpac and the second flowpac usually do not encounter a disorder problem. Further, the receiving party usually does not need to perform re-ordering, and this can reduce RC consumption.

It should be noted that, the field names mentioned in this embodiment of this application are all example names, and may alternatively be other names during actual implementation. This is not limited in this embodiment of this application.

The foregoing mainly describes traffic balancing on a same flow, and the delimitation, RC, and DRC manners for packets in the flow.

In some other embodiments, a plurality of flows may be further aggregated (also referred to as "merged" (merged)) into one flow at a coarse granularity (for example, by using a hash algorithm). For example, a preset algorithm (such as a hash algorithm or another similar algorithm) is used to merge to-be-ordered flows. The flow at the coarse granularity that is formed by aggregation may be referred to as an aggregated flow herein. In this embodiment of this application, the foregoing traffic balancing method may be performed on the aggregated flow. For specific implementations of delimitation, RC, and DRC manners for packets in the aggregated flow, refer to the foregoing description.

Based on this, a "flow" in this specification may refer to a TCP flow in a general sense mentioned above, or may refer to an aggregated flow.

In a possible implementation, aggregated flows that are may share a same RC. Head of line blocking (head of line blocking, HOL) may occur between the flows that share a same RC. Therefore, the receive end processes the next flowpac only when determining that a tail packet corresponding to the previous flowpac has been received.

The solutions provided in the embodiments of this application are described above mainly from a perspective of interaction between different network elements. It can be understood that, to implement the foregoing functions, the sending node and the receiving node include corresponding hardware structures and/or software modules for executing the functions. With reference to the units and algorithm steps described in the embodiments disclosed in this application, the embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, functional unit division of the sending node, the receiving node, and the like may be performed based on the foregoing method examples. For example, functional units may be divided corresponding to the functions, or two or more functions may be integrated into one process unit. The integrated unit may be implemented in a form of hardware, or may be implemented in a form of a software functional unit. It should be noted that, in the embodiments of this application, division into units is an example, and is merely logical function division. In actual implementation, another division manner may be used.

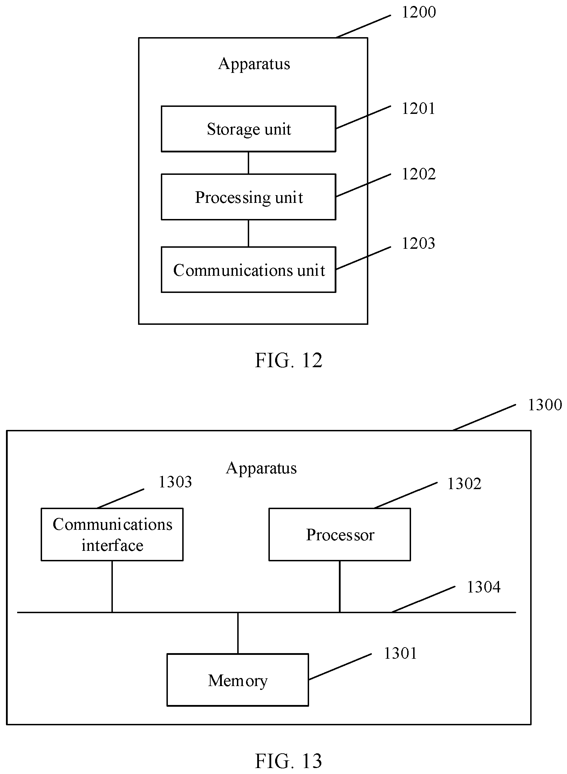

FIG. 12 is a possible example block diagram of a traffic balancing apparatus according to an embodiment of this application. The apparatus 1200 may exist in a form of software, may be a network device, or may be a chip usable in a network device. The apparatus 1200 includes a processing unit 1202 and a communications unit 1203. The processing unit 1202 is configured to control and manage an action of the apparatus 1200. For example, if the apparatus is configured to implement a sending node function, the processing unit 1202 is configured to support the apparatus 1200 in performing S502 in FIG. 5, S602, S603, and S604 in FIG. 6, and/or another process of the technology described herein. If the apparatus is configured to implement a receiving node function, the processing unit 1202 is configured to support the apparatus 1200 in determining whether a tail packet of a first flowpac has been received when a second flowpac is received; if the tail packet of the first flowpac has not been received, performing re-ordering on packets in the first flowpac and the second flowpac by using a re-ordering channel RC; and if determining that the tail packet of the first flowpac has been received, releasing the RC after the re-ordering; and/or performing another process of the technology described in this specification. The communications unit 1203 is configured to support the apparatus 1200 to communicate with another network entity. The apparatus 1200 may further include a storage unit 1201, configured to store program code and data that are of the apparatus 1200.

The processing unit 1202 may be a processor or a controller, for example, may be a CPU, a general-purpose processor, a DSP, an ASIC, an FPGA or another programmable logic device, a transistor logic device, a hardware component, or any combination thereof. The processor may implement or execute various examples of logical blocks, modules, and circuits described with reference to the content disclosed in this application. Alternatively, the processor may be a combination implementing a computing function, for example, a combination of one or more microprocessors, or a combination of the DSP and a microprocessor. The communications unit 1203 may be a communications interface, a transceiver, a transceiver circuit, or the like. The communications interface is a general term. In specific implementation, the communications interface may include a plurality of interfaces, for example, may include an interface between the sending node and the receiving node and/or another interface. The storage unit 1201 may be a memory or a storage device in another form.

When the processing unit 1202 is a processor, the communications unit 1203 is a communications interface, and the storage unit 1201 is a memory, the apparatus 1200 in this embodiment of this application may be an apparatus having a structure shown in FIG. 13.

Refer to FIG. 13. The apparatus 1300 includes a processor 1302, a communications interface 1303, and a memory 1301. Optionally, the apparatus 1300 may further include a bus 1304. The communications interface 1303, the processor 1302, and the memory 1301 may be connected to each other by using the bus 1304. The bus 1304 may be a peripheral component interconnect (Peripheral Component Interconnect, PCI) bus, an extended industry standard architecture (Extended Industry Standard Architecture, EISA) bus, or the like. The bus 1304 may be classified into an address bus, a data bus, a control bus, and the like. For ease of representation, only one thick line is used to represent the bus in FIG. 13, but this does not mean that there is only one bus or only one type of bus.

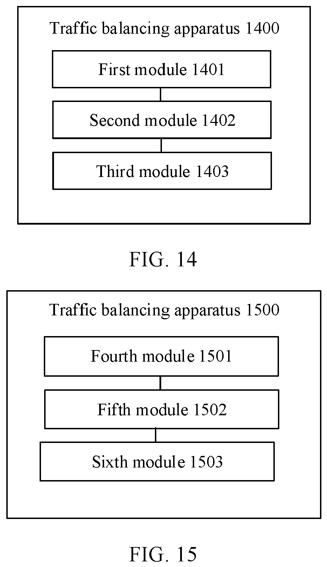

In another possible implementation, when function modules are divided corresponding to functions, if the traffic balancing apparatus is configured to implement the sending node function, FIG. 14 is a schematic diagram of another possible structure of the apparatus implementing the sending node function in the foregoing embodiments. The traffic balancing apparatus 1400 may include a first module 1401, a second module 1402, and a third module 1403. The first module 1401 is configured to support the traffic balancing apparatus 1400 in performing S501 in FIG. 5, S601 in FIG. 6; and/or is configured to perform another process of the solutions described in this specification. The second module 1402 is configured to support the traffic balancing apparatus 1400 in performing the process S502 in FIG. 5 and S602 to S604 in FIG. 6; and is further configured to set a sending path for a packet in a flowpac based on a network balancing principles; and/or is configured to perform another process of the solutions described in this specification. The third module 1403 is configured to support the traffic balancing apparatus 1400 in performing the process S503 in FIG. 5 and S605 in FIG. 6; and is further configured to send a flowpac delimiter by using a first path, where the flowpac delimiter is a control packet used to distinguish between the first flowpac and the second flowpac, and the first path is a path for sending the packet in the first flowpac; and/or is configured to perform another process of the solutions described in this specification. All related content of the steps in the foregoing method embodiments may be cited in function descriptions of corresponding functional modules. Details are not described herein again. Certainly, to implement the technical solutions in the embodiments of this application, the traffic balancing apparatus may further include another module. Details are not described herein again.

If the traffic balancing apparatus is configured to implement the receiving node function, FIG. 15 is a schematic diagram of another possible structure of the apparatus implementing the receiving node function in the foregoing embodiments. The traffic balancing apparatus 1500 may include a fourth module 1501, a fifth module 1502, and a sixth module 1503. The fourth module 1501 is configured to support the traffic balancing apparatus 1500 in determining whether a tail packet of a first flowpac has been received when a second flowpac is received; and/or is configured to perform another process of the solutions described in this specification. The fifth module 1502 is configured to support the traffic balancing apparatus 1500 in, if the tail packet of the first flowpac has not been received, performing re-ordering on packets in the first flowpac and the second flowpac by using a re-ordering channel RC; and/or is configured to perform another process of the solutions described in this specification. The sixth module 1503 is configured to support the traffic balancing apparatus 1500 in, if it is determined that the tail packet of the first flowpac has been received, releasing the RC after the re-ordering; and/or is configured to perform another process of the solutions described in this specification.

A person of ordinary skill in the art may understand that all or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state disk (Solid State Disk, SSD)), or the like.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate parts may or may not be physically separate, and parts displayed as units may or may not be physical units, may be located at one position, or may be distributed on a plurality of network devices (for example, terminals). Some or all of the units may be selected based on actual requirements to achieve the objectives of the solutions of the embodiments.

In addition, functional units in the embodiments of this application may be integrated into one processing unit, or each of the functional units may exist independently, or two or more units are integrated into one unit. The integrated unit may be implemented in a form of hardware, or may be implemented in a form of hardware and a software functional unit.

Based on the foregoing descriptions of the implementations, a person skilled in the art may clearly understand that this application may be implemented by software in addition to necessary universal hardware or by hardware only. In most circumstances, the former is a better implementation. Based on such an understanding, the technical solutions in this application essentially or the part contributing to the conventional technologies may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in the embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A network device, comprising:
a first module (1401), configured to obtain a to-be-sent packet;
a second module (1402), configured to create or maintain flowpacs, and classify the to-be-sent packet into a corresponding flowpac based on a destination node; and
a third module (1403), configured to send the to-be-sent packet based on the flowpac to which the to-be-sent packet belongs; wherein
one flowpac comprises at least one packet, and packets belonging to a same flowpac have a same destination node and a same sending path,
wherein the second module (1402) is further configured to:
create or maintain a first flowpac;
classify a packet that uses a first node as a destination into the first flowpac;
create or maintain a second flowpac; and
classify a subsequent to-be-sent packet that uses the first node as a destination into the second flowpac; wherein
a sending path of a packet in the second flowpac is different from a sending path of a packet in the first flowpac,
wherein the second module (1402) is further configured to:
determine whether a network balancing parameter meets a preset condition; and
if the network balancing parameter meets the preset condition, create or maintain the second flowpac; wherein
the network balancing parameter is used to classify a packet into a corresponding flowpac based on network balancing principles;
**characterized in that** that a network balancing parameter meets a preset condition comprises:
within a preset interval starting from a moment at which a first packet in the first flowpac is sent, no packet destined for a same destination node exists;
duration of the first flowpac reaches preset duration; and
a sending frequency of the first flowpac reaches a preset frequency.

2. The network device according to claim 1, wherein that a network balancing parameter meets a preset condition further comprises:
a data volume of the first flowpac reaches a preset data volume.

3. The network device according to claim 1 or 2, wherein at least one packet in the first flowpac carries a first delimiter identifier, at least one packet in the second flowpac carries a second delimiter identifier, and the first delimiter identifier and the second delimiter identifier are used to distinguish between the first flowpac and the second flowpac.

4. The network device according to any one of claims 1 to 3, wherein the third module (1403) is further configured to send a flowpac delimiter by using a first path, the flowpac delimiter is a control packet used to distinguish between the first flowpac and the second flowpac, and the first path is a path for sending the packet in the first flowpac.

5. The network device according to any one of claims 1 to 4, wherein packets in one flowpac come from a same flow or different flows.

6. The network device according to any one of claims 1 to 5, wherein the second module (1402) is further configured to set a sending path for a packet in a flowpac based on network balancing principles.

7. A traffic balancing method, comprising:
creating or maintaining (S602) a first flowpac;
classifying (S602) a packet that uses a first node as a destination into the first flowpac;
when a network balancing parameter meets a preset condition, creating or maintaining (S604) a second flowpac; and
classifying (S604) a subsequent packet that uses the first node as a destination into the second flowpac; wherein
packets belonging to a same flowpac have a same destination node and a same sending path; and a sending path of a packet in the second flowpac is different from a sending path of a packet in the first flowpac,
wherein the network balancing parameter is used to classify a packet into a corresponding flowpac based on network balancing principles;
**characterized in that** that a network balancing parameter meets a preset condition comprises:
within a preset interval starting from a moment at which a first packet in the first flowpac is sent, no packet destined for a same destination node exists;
duration of the first flowpac reaches preset duration; and
a sending frequency of the first flowpac reaches a preset frequency.

## Patentansprüche

1. Netzwerkvorrichtung, umfassend:
ein erstes Modul (1401), das dazu ausgelegt ist, ein zu sendendes Paket zu erhalten;
ein zweites Modul (1402), das dazu ausgelegt ist, "Flowpacs" zu erstellen oder aufrechtzuerhalten und das zu sendende Paket basierend auf einem Zielknoten in ein entsprechendes "Flowpac" einzuordnen;
ein drittes Modul (1403), das dazu ausgelegt ist, das zu sendende Paket basierend auf dem "Flowpac" zu senden, zu dem das zu sendende Paket gehört; wobei ein "Flowpac" mindestens ein Paket umfasst, und Pakete, die zu einem gleichen "Flowpac" gehören, einen gleichen Zielknoten und einen gleichen Sendepfad aufweisen,
wobei das zweite Modul (1402) ferner zu Folgendem ausgelegt ist:
Erstellen oder Aufrechterhalten eines ersten "Flowpacs";
Einordnen eines Pakets, das einen ersten Knoten als Ziel verwendet, in das erste "Flowpac";
Erstellen oder Aufrechterhalten eines zweiten "Flowpacs"; und
Einordnen eines nachfolgenden zu sendenden Pakets, das den ersten Knoten als Ziel verwendet, in das zweite "Flowpac"; wobei
ein Sendepfad eines Pakets in dem zweiten "Flowpac" sich von einem Sendepfad eines Pakets in dem ersten "Flowpac" unterscheidet,
wobei das zweite Modul (1402) ferner zu Folgendem ausgelegt ist:
Bestimmen, ob ein Netzwerkausgleichsparameter eine voreingestellte Bedingung erfüllt; und,
wenn der Netzwerkausgleichsparameter die vorgegebene Bedingung erfüllt, Erstellen oder Aufrechterhalten des zweiten "Flowpacs"; wobei
der Netzwerkausgleichsparameter verwendet wird, um ein Paket basierend auf Netzwerkausgleichsprinzipien in ein entsprechendes "Flowpac" einzuordnen;
**dadurch gekennzeichnet, dass**, dass ein Netzwerkausgleichsparameter eine vorgegebene Bedingung erfüllt, umfasst, dass:
innerhalb eines voreingestellten Intervalls, das zu einem Zeitpunkt beginnt, zu dem ein erstes Paket in dem ersten "Flowpac" gesendet wird, kein Paket existiert, das für einen gleichen Zielknoten bestimmt ist;
eine Dauer des ersten "Flowpacs" eine voreingestellte Dauer erreicht; und
eine Sendefrequenz des ersten "Flowpacs" eine voreingestellte Frequenz erreicht.

2. Netzwerkvorrichtung nach Anspruch 1, wobei, dass ein Netzwerkausgleichsparameter eine voreingestellte Bedingung erfüllt, ferner umfasst, dass:
ein Datenvolumen des ersten "Flowpacs" ein voreingestelltes Datenvolumen erreicht.

3. Netzwerkvorrichtung nach Anspruch 1 oder 2, wobei mindestens ein Paket in dem ersten "Flowpac" eine erste Begrenzungskennung trägt, mindestens ein Paket in dem zweiten "Flowpac" eine zweite Begrenzungskennung trägt und die erste Begrenzungskennung und die zweite Begrenzungskennung zur Unterscheidung zwischen dem ersten "Flowpac" und dem zweiten "Flowpac" verwendet werden.

4. Netzwerkvorrichtung nach einem der Ansprüche 1 bis 3, wobei das dritte Modul (1403) ferner dazu ausgelegt ist, eine "Flowpac"-Begrenzung durch Verwenden eines ersten Pfades zu senden, wobei die "Flowpac"-Begrenzung ein Steuerpaket ist, das zum Unterscheiden zwischen dem ersten "Flowpac" und dem zweite "Flowpac" verwendet wird, und der erste Pfad ein Pfad zum Senden des Pakets in dem ersten "Flowpac" ist.

5. Netzwerkvorrichtung nach einem der Ansprüche 1 bis 4, wobei Pakete in einem "Flowpac" aus einem gleichen Fluss oder unterschiedlichen Flüssen kommen.

6. Netzwerkvorrichtung nach einem der Ansprüche 1 bis 5, wobei das zweite Modul (1402) ferner dazu ausgelegt ist, einen Sendepfad für ein Paket in einem "Flowpac" basierend auf Netzwerkausgleichsprinzipien festzulegen.

7. Verkehrsausgleichsverfahren, umfassend:
Erstellen oder Aufrechterhalten (S602) eines ersten "Flowpacs";
Einordnen (S602) eines Pakets, das einen ersten Knoten als Ziel verwendet, in das erste "Flowpac";
wenn ein Netzwerkausgleichsparameter eine voreingestellte Bedingung erfüllt, Erstellen oder Aufrechterhalten (S604) eines zweiten "Flowpacs"; und
Einordnen (S604) eines nachfolgenden Pakets, das den ersten Knoten als Ziel verwendet, in das zweite "Flowpac";
wobei Pakete, die zu einem gleichen "Flowpac" gehören, einen gleichen Zielknoten und einen gleichen Sendepfad aufweisen; und ein Sendepfad eines Pakets in dem zweiten "Flowpac" sich von einem Sendepfad eines Pakets in dem ersten "Flowpac" unterscheidet,
wobei der Netzwerkausgleichsparameter verwendet wird, um ein Paket basierend auf Netzwerkausgleichsprinzipien in ein entsprechendes "Flowpac" einzuordnen;
**dadurch gekennzeichnet, dass**, dass ein Netzwerkausgleichsparameter eine vorgegebene Bedingung erfüllt, umfasst, dass:
innerhalb eines voreingestellten Intervalls, das zu einem Zeitpunkt beginnt, zu dem ein erstes Paket in dem ersten "Flowpac" gesendet wird, kein Paket existiert, das für einen gleichen Zielknoten bestimmt ist;
eine Dauer des ersten "Flowpacs" eine voreingestellte Dauer erreicht; und
eine Sendefrequenz des ersten "Flowpacs" eine voreingestellte Frequenz erreicht.

## Revendications

1. Dispositif de réseau, comprenant :
un premier module (1401), configuré pour obtenir un paquet à envoyer ;
un deuxième module (1402), configuré pour créer ou maintenir des flowpacs, et
classer le paquet à envoyer dans un flowpac correspondant sur la base d'un nœud de destination ; et
un troisième module (1403), configuré pour envoyer le paquet à envoyer sur la base du flowpac auquel le paquet à envoyer appartient ; dans lequel un flowpac comprend au moins un paquet, et les paquets appartenant à un même flowpac ont un même nœud de destination et un même chemin d'envoi,
dans lequel le deuxième module (1402) est également configuré pour :
créer ou maintenir un premier flowpac ;
classer un paquet qui utilise un premier nœud comme destination dans le premier flowpac ;
créer ou maintenir un deuxième flowpac ; et
classer un paquet à envoyer suivant qui utilise le premier nœud comme destination dans le deuxième flowpac ; dans lequel
un chemin d'envoi d'un paquet situé dans le deuxième flowpac est différent d'un chemin d'envoi d'un paquet situé dans le premier flowpac,
dans lequel le deuxième module (1402) est également configuré pour :
déterminer si un paramètre d'équilibrage de réseau vérifie une condition prédéfinie ; et
si le paramètre d'équilibrage de réseau vérifie la condition prédéfinie, créer ou maintenir le deuxième flowpac ; dans lequel
le paramètre d'équilibrage de réseau est utilisé pour classer un paquet dans un flowpac correspondant sur la base de principes d'équilibrage de réseau ;
**caractérisé en ce que** le fait qu'un paramètre d'équilibrage de réseau vérifie une condition prédéfinie comprend :
au cours d'un intervalle prédéfini commençant à un moment auquel un premier paquet situé dans le premier flowpac est envoyé, aucun paquet destiné à un même nœud de destination n'existe ;
la durée du premier flowpac atteint une durée prédéfinie ; et
une fréquence d'envoi du premier flowpac atteint une fréquence prédéfinie.

2. Dispositif de réseau selon la revendication 1, dans lequel le fait qu'un paramètre d'équilibrage de réseau vérifie une condition prédéfinie comprend également :
un volume de données du premier flowpac atteint un volume de données prédéfini.

3. Dispositif de réseau selon la revendication 1 ou 2, dans lequel au moins un paquet situé dans le premier flowpac transporte un premier identifiant de délimiteur, au moins un paquet situé dans le deuxième flowpac transporte un deuxième identifiant de délimiteur, et le premier identifiant de délimiteur et le deuxième identifiant de délimiteur sont utilisés pour distinguer le premier flowpac du deuxième flowpac.

4. Dispositif de réseau selon l'une quelconque des revendications 1 à 3, dans lequel le troisième module (1403) est également configuré pour envoyer un délimiteur de flowpac en utilisant un premier chemin, le délimiteur de flowpac est un paquet de commande utilisé pour distinguer le premier flowpac du deuxième flowpac, et le premier chemin est un chemin servant à envoyer le paquet situé dans le premier flowpac.

5. Dispositif de réseau selon l'une quelconque des revendications 1 à 4, dans lequel les paquets situés dans un flowpac proviennent d'un même flux ou de flux différents.

6. Dispositif de réseau selon l'une quelconque des revendications 1 à 5, dans lequel le deuxième module (1402) est également configuré pour définir un chemin d'envoi pour un paquet situé dans un flowpac sur la base de principes d'équilibrage de réseau.

7. Procédé d'équilibrage de réseau, comprenant les étapes consistant à :
créer ou maintenir (S602) un premier flowpac ;
classer (S602) un paquet qui utilise un premier nœud comme destination dans le premier flowpac ;
lorsqu'un paramètre d'équilibrage de réseau vérifie une condition prédéfinie, créer ou maintenir (S604) un deuxième flowpac ; et
classer (S604) un paquet suivant qui utilise le premier nœud comme destination dans le deuxième flowpac ; dans lequel
les paquets appartenant à un même flowpac ont un même nœud de destination et un même chemin d'envoi ; et un chemin d'envoi d'un paquet situé dans le deuxième flowpac est différent d'un chemin d'envoi d'un paquet situé dans le premier flowpac, dans lequel le paramètre d'équilibrage de réseau est utilisé pour classer un paquet dans un flowpac correspondant sur la base de principes d'équilibrage de réseau ;
**caractérisé en ce que** le fait qu'un paramètre d'équilibrage de réseau vérifie une condition prédéfinie comprend :
au cours d'un intervalle prédéfini commençant à un moment auquel un premier paquet situé dans le premier flowpac est envoyé, aucun paquet destiné à un même nœud de destination n'existe ;
la durée du premier flowpac atteint une durée prédéfinie ; et
une fréquence d'envoi du premier flowpac atteint une fréquence prédéfinie.
